Europäisches Patentamt

European Patent Office

Office européen des brevets

(19)

(11) Veröffentlichungsnummer: **0 181 854**
**B1**

(12) **EUROPÄISCHE PATENTSCHRIFT**

(45) Veröffentlichungstag der Patentschrift: **18.07.90**

(21) Anmeldenummer: **85890234.9**

(22) Anmeldetag: **25.09.85**

(51) Int. Cl.⁵: **E 04 B 1/49**, E 04 C 3/14, E 04 C 3/18, F 16 B 15/00

(54) Nagelplatte zur Herstellung von Verbundträgern.

(30) Priorität: **29.10.84 AT 3428/84**
**29.10.84 AT 3429/84**
**15.11.84 AT 3624/84**
**15.11.84 AT 3625/84**
**03.07.85 AT 1977/85**
**08.07.85 AT 2021/85**

(43) Veröffentlichungstag der Anmeldung:
**21.05.86 Patentblatt 86/21**

(45) Bekanntmachung des Hinweises auf die Patenterteilung:
**18.07.90 Patentblatt 90/29**

(84) Benannte Vertragsstaaten:
**AT DE FR GB IT SE**

(56) Entgegenhaltungen:
**DE-A-1 534 699**
**DE-C- 452 338**
**US-A-2 108 831**
**US-A-3 417 651**
**US-A-4 442 649**

(73) Patentinhaber: **Johann Wolf GmbH KG**
**Mühldorf 86**
**A-4644 Scharnstein (AT)**

(72) Erfinder: **Wolf, Johann**
**Mühldorf 86**
**A-4644 Scharnstein (AT)**

(74) Vertreter: **Beer, Otto, Dipl.-Ing. et al**
**Lindengasse 8**
**A-1071 Wien (AT)**

Courier Press, Leamington Spa, England.

**Beschreibung**

Die Erfindung bezieht sich auf eine Nagelplatte zur Herstellung von Verbundträgern, bestehend aus einer Blechplatte mit einem ersten Paar von Kanten, die zueinander parallel sind und einem zweiten Paar von Kanten, welche die Kanten des ersten Paares miteinander verbinden und zueinander parallel sind, mehreren von der Blechplatte wegstehenden Nägeln, wobei die Nägel durch parallele, zungenförmige Ausstanzungen aus der Blechplatte gebildet sind, wobei die Blechplatte weiters einen in der Mitte angeordneten, nagelfreien Bereich aufweist, der sich längs einer Achse parallel zu dem ersten Paar von Kanten erstreckt, wobei alle parallelen zungenförmigen Ausstanzungen parallel zum zweiten Paar von Kanten in der Blechplatte ausgerichtet und auf gegenüberliegenden Seiten des nagelfreien Bereiches gleichmäßig verteilt sind.

Nagelplatten, die aus Blechplatten und aus Nägeln, die aus zungenförmigen Ausstanzungen der Blechplatten gebildet sind, bestehen, und die zur Verbindung von Holzteilen bestimmt sind, sind in den unterschiedlichsten Ausführungsformen bekannt. Im wesentlichen betreffen die bekannten Vorschläge eine besondere Gestaltung der Nägel bezüglich ihrer Umrißform und ihres Längs- und Querschnittes, um deren Halt in den Holzteilen zu verbessern. Es wird verwiesen auf: DE—ASn 1 658 870 und 27 41 533; DE—OSn 26 13 522 und 26 50 181; US—PSn 3 479 919, 3 892 160, 3 951 033 und 4 209 265; FR—PSn 2.049.543 und 2.501.807; CH—PS 613 247; GB—PS 1 488 418 und PCT/AU 84/00095. Alle bekannten Nagelplatten weisen im allgemeinen eine rechteckige Umrißform auf und sind überwiegend zur Verbindung von Rahmenteilen bestimmt.

Die DE—A—1 534 699 beschreibt eine Nagelplatte, die gleichfalls eine rechteckige Umrißform aufweist, bei der aber die zungenförmigen Ausstanzungen senkrecht zu der vorerwähnten Achse stehen, wobei die Abbiegekanten dieser Zungen in einem Winkel von 30—45° geneigt zu dieser Achse gerichtet sind.

Auch aus der US—A—4 442 649 sind nur rechteckige Nagelplatten mit in parallelen Reihen angeordneten, durch Ausstanzungen gebildeten Nägeln bekannt geworden, ohne daß aber eine in der Mitte der Nagelplatte liegende nagelfreie Zone vorgesehen ist.

Die Erfindung liegt die Aufgabe zu Grunde, eine Nagelplatte zu schaffen, mit deren Hilfe die Balken eines Verbundträgers mit großer Kraft aneinandergepreßt werden, um damit die Tragfähigkeit des Verbundträgers zu erhöhen. Ferner strebt die Erfindung eine Verbesserung von Nagelplatten hinsichtlich deren Halt in den Balken an, unter weitgehender Beseitigung einer Sprengwirkung der Nägel auf die Holzteile.

Das wesentliche Merkmal der erfindungsgemäßen Nagelplatte der einleitend geschilderten Art besteht darin, daß das zweite Paar von Kanten gegenüber dem ersten Paar von Kanten geneigt ausgerichtet ist und daß alle parallelen zungenförmigen Ausstanzungen parallel zum zweiten Paar von Kanten in der Blechplatte ausgerichtet sind. Die sich durch die Erfindung ergebende Umrißform der Nagelplatten in Form eines Rhomboides oder Rhombus im Zusammenwirken mit der Schrägstellung der Nägel (bzw. der Mehrzahl der Nägel) bezüglich der Stoßfuge zwischen den Balken ergibt eine erhöhte Zusammenpressung und damit Verbundwirkung der Träger unter weitgehender Vermeidung einer Sprengwirkung auf das Holz der zu verbindenden Balken.

Eine weitere Verbesserung in dieser Richtung ergibt sich erfindungsgemäß dadurch, daß die Nägel in je einer Nagelreihe in Zick-Zack-Lage durch in abwechselnder Richtung verlaufende Einstanzungen gebildet sind.

Einzelheiten der Erfindung werden an Hand der Zeichnung erläutert, die in nicht einschränkender Weise Ausführungsbeispiele für die erfindungsgemäßen Nagelplatten und die mit diesen hergestellte Verbundträger schematisch veranschaulicht. Es zeigt

Figur 1 eine Seitenansicht eines Verbundträgers, dessen Balken mittels erfindungsgemäßer Nagelplatten miteinander verbunden sind,

Figur 2 in vergrößerter Darstellung eine Draufsicht auf eine Ausführungsform einer erfindungsgemäßen Nagelplatte,

Figur 2a einen einzelnen Nagel in Ansicht und

Figur 3 eine weitere Ausführungsform einer Nagelplatte.

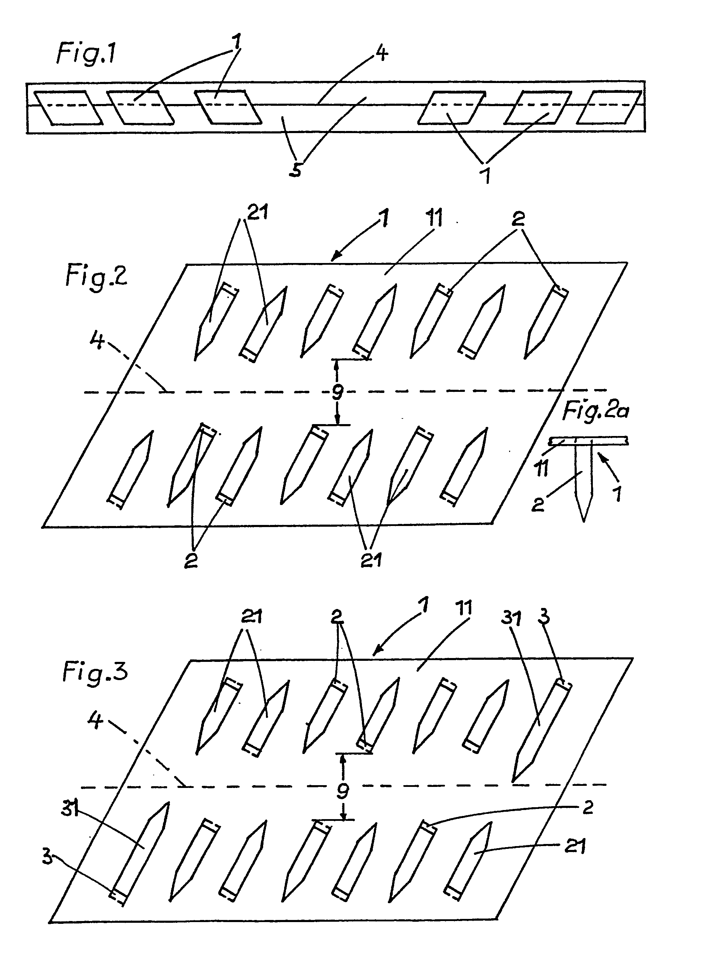

Gemäß Figur 1 ist ein Verbundträger aus zwei Balken 5 zusammengesetzt, die mittels Nagelplatten 1 an der Stoßfuge 4 zusammengepreßt und zu einer tragfähigen Einheit miteinander verbunden sind. Die Nagelplatten 1 weisen einen rhomboidförmigen Umriß auf, wobei angenommen sei, daß die Enden des Verbundträgers gegenüber seiner Längsmitte stärker beansprucht und demgemäß die Nagelplatten 1 an den Trägerenden dichter gesetzt sind.

In Figur 2 ist eine Nagelplatte 1 und in Figur 2a ein einzelner, aus einer zungenförmigen Einstanzung 21 senkrecht herausgedrückter Nagel 2 vergrößert veranschaulicht. Die Nagelplatte 1 besteht aus einer Blechplatte 11. Entsprechend der durch eine gestrichelte Linie angedeuteten Stoßfuge 4 ist zwischen den in Reihen angeordneten Nägeln 2 ein nagelfreier Bereich 9 vorgesehen. Sämtliche Nägel 2 sind gleichgerichtet und schräg zur Stoßfuge 4 angeordnet. Wesentlich dabei ist daß die Nägel 2 einer Nagelreihe in Zick-Zack-Lage, durch in abwechselnder Richtung angebrachte Einstanzungen 21 angeordnet sind. Einerseits durch die schräge Lage der Nägel 2, anderseits durch deren Zick-Zack-Lage in einer Reihe, wird die Sprengwirkung auf die zu verbindenden Balken 5 herabgesetzt, dabei aber eine gleichmäßige und dichte Verteilung der Nägel 2 über die Fläche der Nagelplatte 1 erreicht. Dies trägt zu einer hohen Festigkeit der Verbindung der Balken 5 zu einem Verbundträger (Preßbalken) bei.

Die in Figur 3 in Draufsicht dargestellte Nagelplatte 1 besteht gleich wie die an Hand der Figuren 2 und 2a beschriebene Nagelplatte 1 aus einer Blechplatte 11, aus der mittels Einstanzungen 21 Nägel 2 mit zungenartiger Gestalt herausgedrückt sind. Diese Nägel 2 weisen untereinander eine gleiche Länge auf. Zusätzlich sind längere Nägel 3 vorgesehen, die durch Einstanzungen 31 der Blechplatte 11 gebildet sind. Es kann bei kleineren Nagelplatten 1 ein einzelner längerer Nagel 3, bei größeren Nagelplatten 1 können zwei oder drei längere Nägel 3 vorgesehen werden. Zwei längere Nägel 3 sind dabei, wie in Figur 3 veranschaulicht, einander diagonal gegenüberliegend in den Eckbereichen der rhomboidförmigen Nagelplatte 1 angeordnet. Werden drei längere Nägel 3 vorgesehen, liegen zwei von diesen an einer Schmalseite der Nagelplatte 1, der dritte an der gegenüberliegenden Schmalseite etwa in deren Mitte. Die Anordnung von längeren Nägeln 3 gegenüber den gleich lang ausgebildeten kürzeren Nägeln 2 ermöglicht ein Anheften einer Nagelplatte durch einen, zwei oder drei Hammerschläge an den längeren Nägeln zum Festhalten der Nagelplatten 1 an einer gewünschten Stelle, bevor diese maschinell durch Preßwerkzeuge eingetrieben werden. Auch bei der Nagelplatte 1 gemäß Figur 3 ist entlang einer Stoßfuge 4 ein nagelfreier Bereich 9 vorgesehen.

Unter die Erfindung fallen auch Nagelplatten, deren Blechplatten 11 einen anderen als einen rhomboidförmigen (z.B. einen rechteckigen oder quadratischen) Umriß haben und in dem die Nägel 2, 3 in einem rhomboid- oder rhombusförmigen Bereich ("wirksamer Bereich") angeordnet sind. Dabei können einzelne Nägel, z.B. ähnlich den Nägeln 3 länger ausgebildete Heftnägel, auch außerhalb des wirksamen Bereiches angeordnet sein.

Die dargestellten und beschriebenen Ausführungsformen der erfindungsgemäßen Nagelplatte dienen nur zur Erläuterung des Wesens der Erfindung, ohne diese auf Einzelheiten zu beschränken. So können zusätzlich zu den Nägeln 2 und 3, die zueinander parallel ausgerichtet sind, in der Nagelplatte 1 bzw. im wirksamen Bereich 7 der Nagelplatte 6 auch einige anders ausgerichtete Nägel vorgesehen sein. Bevorzugt ist es aber bei der Erfindung, wenn alle Nägel, wie in den Figuren gezeigt, zueinander parallel ausgerichtet sind.

## Patentansprüche

1. Nagelplatte, bestehend aus einer Blechplatte (11) mit einem ersten Paar von Kanten, die zueinander parallel sind und einem zweiten Paar von Kanten, welche die Kanten des ersten Paares miteinander verbinden und zueinander parallel sind, aus mehreren von der Blechplatte wegstehenden Nägeln (2, 3), wobei die Nägel durch parallele, zungenförmige Ausstanzungen (21, 31) aus der Blechplatte (11) gebildet sind, wobei die Blechplatte weiters einen in der Mitte angeordneten, nagelfreien Bereich (9) aufweist, der sich längs einer Achse parallel zu dem ersten Paar von Kanten erstreckt, wobei alle parallelen zungenförmigen Ausstanzungen (21, 31) parallel zum zweiten Paar von Kanten in der Blechplatte ausgerichtet und auf gegenüberliegenden Seiten des nagelfreien Bereiches (9) gleichmäßig verteilt sind, dadurch gekennzeichnet, daß das zweite Paar von Kanten gegenüber dem ersten Paar von Kanten geneigt ausgerichtet ist und daß alle parallelen zungenförmigen Ausstanzungen (21, 31) zur obengennanten Achse geneigt sind.

2. Nagelplatte nach Anspruch 1, dadurch gekennzeichnet, daß die Nägel (2, 3) in je einer Nagelreihe in Zick-Zack-Lage durch in abwechselnder Richtung verlaufende Ausstanzungen (21, 31) gebildet sind.

## Revendications

1. Plaque à pointes composée d'une plaque de tôle (11) présentant une première paire de bords qui sont parallèles l'un à l'autre et une deuxième paire de bords qui relient entre eux les bords de la première pair et sont parallèles l'un à l'autre, de plusieurs pointes (2, 3) faisant saillie de la plaque de tôle, les pointes étant formées par des crevées (21, 31) parallèles en forme de languettes dans la plaque de tôle (1), la plaque de tôle présentant en outre une zone (9) exempte de pointes disposée au milieu et s'étendant le long d'un axe, parallèlement à la première paire de bords, toutes les crevées (21, 31) parallèles en forme de languettes étant orientées parallèlement à la deuxième paire de bords dans la plaque de tôle et étant réparties régulièrement sur des côtés opposés de la zone (9) exempte de pointes, caractérisée en ce que la deuxième paire de bords est inclinée par rapport à la première paire de bords et en ce que toutes les crevées (21, 31) parallèles en forme de languettes sont inclinées par rapport audit axe.

2. Plaque à pointes selon la revendication 1, caractérisée en ce que les pointes (2, 3) sont formées en zigzag dans chaque rangée de pointes par des crevées (21, 31) s'étendant alternativement dans un sens et dans l'autre.

## Claims

1. Nail plate, consisting of a sheet metal plate (11) with a first pair of edges, which are parallel to one another, and a second pair of edges which connect together the edges of the first pair and are parallel to one another, a plurality of nails (2, 3) standing out of the sheet metal plate, the nails being formed by parallel, tongue-shaped stamped out parts (21, 31) of the sheet metal plate (11), the sheet metal plate further having a nail-free region (9) centrally arranged, extending along an axis parallel to the first pair of edges, wherein all parallel tongue-shaped stamped out parts (21, 31) are directed parallel to the second pair of edges in the sheet metal plate and are uniformly distributed on both sides of the nail-free region (9), characterized in that the second pair of edges is arranged at an inclination relative to the first pair of edges and in that all parallel, tongue-shaped stamped out parts (21, 31) are inclined relative to the abovementioned axis.

2. Nail plate according to claim 1, characterized in that the nails (2, 3) in each nail row are formed in a zig-zag arrangement by stamped out parts (21, 31) extending in alternating directions.

*Fig.1*

*Fig.2*

*Fig.2a*

*Fig.3*